# EUROPÄISCHE PATENTSCHRIFT

(11) **EP 2 180 962 B1**
(45) Veröffentlichungstag und Bekanntmachung des Hinweises auf die Patenterteilung: **26.10.2011**
(21) Anmeldenummer: 08785684.5
(22) Anmeldetag: 22.08.2008
(51) Int. Cl.: B09B 3/00, B03B 9/06, F23G 5/00, B02C 13/16

(54) **VERFAHREN UND ANLAGE ZUR GEWINNUNG VON METALLTEILEN AUS RÜCKSTÄNDEN VON MÜLLVERBRENNUNGSPROZESSEN**
PROCESS AND PLANT FOR OBTAINING METAL PARTS FROM RESIDUES OF WASTE INCINERATION PROCESSES
PROCÉDÉ ET ÉQUIPEMENT DE PRODUCTION DE MORCEAUX DE MÉTAL À PARTIR DES RÉSIDUS D'INCINÉRATION DES ORDURES

(30) Priorität: 25.08.2007 DE 102007040225; 11.03.2008 DE 102008013661
(43) Veröffentlichungstag der Anmeldung: 05.05.2010
(73) Patentinhaber: Weingart und Kubrat GmbH, 21035 Hamburg (DE)
(72) Erfinder: WEINGART, Andreas, CH-4161 Hochwald (CH)
(74) Vertreter: Wagner, Kilian
(86) Internationale Anmeldenummer: PCT/EP2008/006927
(87) Internationale Veröffentlichungsnummer: WO 2009/027062

(56) Entgegenhaltungen:
- EP-A- 0 691 160
- EP-A- 0 778 086
- EP-A- 1 749 804
- WO-A-2007/036362
- DE-A1- 10 206 834
- JP-A- 9 137 923
- US-A- 4 044 956

## Beschreibung

Die Erfindung bezieht sich auf ein Verfahren und eine Anlage zur Gewinnung von Metallteilen aus Schlacken von Müllverbrennungsprozessen.

Aus der DE 100 06 834 A1 ist eine Anlage für die Behandlung von metallhaltigen Verbundstoffen als Behandlungsgut mit einem einer Prallmühle vorgeschalteten Metallabscheider sowie gegebenenfalls einen der Prallmühle folgenden Wirbelstromabscheider als Einrichtung zur Abscheidung von Behandlungsgut durch Verwirbelung bekannt, wobei zum Rückgewinnen von Eisen und Nicht-Eisenmetallen aus der Schlacke einer Müllverbrennungsanlage eine Siebstation sowohl mit ihrem Austrag für Feinkorn als auch mit dem Austrag für das Überkorn jeweils an einen Metallabscheider angeschlossen und dessen Austrag für nichtmagnetisches Haufwerk einer Prallmühle nachgeordnet ist. Bei dem bekannten Verfahren wird Schlacke aus einem Müllverbrennungsverfahren als Behandlungsgut zu Schlackefeinkorn verarbeitet und die Anteile an Eisen und/oder Nicht-Eisenmetallen werden freigelegt und anschließend getrennt.

Ähnliche Verfahren und Anlagen sind aus der US-A-4044956, der EP-A-1749804, EP-A-0691160, der JP 09137923 A, der WO 2007/036362 A sowie der EP-A-0778086 bekannt.

Zur Vermeidung von Deponien ist bekannt, insbesondere Abfälle aus Haushalten zu verbrennen. Dies geschieht in sogenannten Müllverbrennungsanlagen. Es ist auch bereits bekannt, bei der Müllverbrennung Energie zu erzeugen. Dies erfordert eine geeignete Aufbereitung der Abfallstoffe.

Der Müllverbrennung geht häufig keine Vorsortierung voraus, bei der etwa die im Müll befindlichen Metallteile separiert werden.

Bei der Müllverbrennung entsteht als Rückstand Schlacke. Metallteile, die noch in die Verbrennungsanlage eingetragen werden, werden zusammen mit der Schlacke aus der Verbrennungsanlage ausgetragen. Da die Temperatur in der Verbrennungsanlage üblicherweise nicht die Schmelztemperatur aller Metalle erreicht, verändern diese normalerweise nicht ihre Ursprungsform. Es ist daher möglich, eine Trennung von Metallteilen und Schlacken durch Magnete und Wirbelstromabscheider vorzunehmen. Allerdings befindet sich eine nicht unerhebliche Menge an Metall in Schlacke eingeschlossen. Außerdem sind noch freie Metalle, die im Wirbelstromabscheider oder durch Magnete nicht ausgeschieden werden, mit Schlacke behaftet, für die der Verwerter von Altmetall keine Verwendung findet.

Der Erfindung liegt die Aufgabe zugrunde, ein Verfahren zur Gewinnung von Metallteilen aus Schlacken von Müllverbrennungsprozessen zu schaffen, bei dem auch in Schlacken eingeschlossene Metallteile und freie Metallstücke gewonnen werden können, im Wesentlichen ohne diese zu zerstören bzw. zu zerkleinern.

Diese Aufgabe wird erfindungsgemäßs durch das Verfahren nach Patentanspruchs 1 und durch die Anlage nach Patentanspruch 7 gelöst. Vorteilhafte Weiterbildungen des Erfindung sind Gegen stand der betreffenden abhaingigen Ansprüche 2 bis 2 und 8 bis 11.

Bei dem erfindungsgemäßen Verfahren wird durch einen Magnet- und Wirbelstromabscheidungsprozeß weitgehend freies Metall von der Schlacke getrennt. Die Schlacke wird anschließend mit Hilfe eines weiteren Verfahrens, insbesondere eines Induktionsmeßverfahrens in metallfreie und Metall enthaltende Schlacke sowie freie Metalle getrennt. Ein solches Verfahren ist grundsätzlich bekannt, etwa aus Artikel "Kompakt, schnell und sauber" im RECYCLING-Magazin 05/2007. Es ist möglich, durch ein geeignetes Detektionsverfahren festzustellen, ob Schlackebrocken Metall in meßbarem Umfang enthalten. Durch eine geeignete Trennmethode, beispielsweise durch Ausblasen mit Druckluft, lassen sich die metallbehafteten Schlackenstücke sowie freie Metalle von den metallfreien trennen. Die Metall enthaltende Schlacke und freie Metalle werden in den oberen Einlauf eines Schachtes einer Zerkleinerungsvorrichtung gegeben, in dem z.B. mindestens eine Gruppe von axial beabstandeten Rotorelementen um eine vertikale Achse drehend angetrieben ist. Vorzugsweise weisen Rotorelemente einer oberen Gruppe eine Drehrichtung auf, die entgegengesetzt zur Drehrichtung von Rotorelementen einer darunter angeordneten Gruppe ist. Die Rotorelemente, beispielsweise Ketten oder dergleichen, wirken schlagend auf die Schlacke ein und schleudern sie außerdem gegen die Wandung des Schachtes. Besonders wirksam ist der gegenläufige Schlagimpuls, wenn die Schlacke von der einen Gruppe der Rotorelemente in die andere übertritt. Dieses Verfahren bewirkt, daß die Schlacke zu körnigem oder pulverförmigem Material zerkleinert wird, während das Metall im Wesentlichen unzerkleinert bleibt. Freie Metallteile werden von anhaftender Schlacke befreit. Schließlich wird das aus dem Auslaß der Zerkleinerungsvorrichtung austretende Material in einem weiteren Schritt separiert, indem die zerkleinerte Schlacke von den Metallteilen getrennt wird. Dies kann über ein Sieb, einen Windsichter oder dergleichen Trennvorrichtungen erfolgen.

Eine Zerkleinerungsvorrichtung, wie sie obenerwähnt ist, ist grundsätzlich bekannt, etwa aus WO 2007/036362. Sie wird zum Zerkleinern von Haufwerk eingesetzt. Mit ihr kann relativ heterogenes, schüttfähiges Material in ein relativ homogenes zerkleinertes Gemisch verwandelt werden. Bei dem erfindungsgemäßen Verfahren wird diese Vorrichtung dazu verwendet, in Schlacke eingeschlossenes Metall und Metallteile von der Schlacke zu befreien und der Verwendung zugänglich zu machen.

Nach einer Ausgestaltung der Erfindung erfolgt in einer weiteren Stufe die Trennung des Metallgemisches durch Separierung von Nichteisen und Eisenmetallen.

Um das erfindungsgemäße Verfahren effizienter zu gestalten, sieht eine Ausgestaltung der Erfindung vor, daß vor dem Trennen von metallbehafteter Schlacke und freien Metallen von metallfreier Schlacke Unterkorn abgetrennt wird. Das Unterkorn bewegt sich zum Beispiel in der Größe von 0 - 5 mm. Dabei wird von der Erkenntnis ausgegangen, daß sich Metallteile im Unterkorn kaum noch finden und es daher nicht effizient ist, dieses einem Detektions- und Zerkleinerungsprozeß zu unterwerfen. Bei der Entfernung des Unterkorns werden bis zu 40 Masseprozent der Schlacke entfernt.

Besonders vorteilhaft ist, wenn in der Zerkleinerungsvorrichtung mehr als zwei Gruppen von Rotorelementen nacheinander auf das Gut einwirken, wobei die Rotorelemente benachbarter Gruppen jeweils entgegengesetzten Drehsinn haben.

Mit der Erfindung wird der Vorteil erhalten, daß aus der Schlacke von Müllverbrennungsprozessen die Metalle weitgehend entfernt werden und dadurch einer Verwertung zugeführt werden können. Ein weiterer und möglicherweise noch größerer Vorteil besteht darin, daß die Schlacke in mehr oder weniger aufbereiteter Form einer weiteren Verwendung zugeführt werden kann, beispielsweise im Tiefbau, da der Anteil schädlicher Metalle, welche einem solchen Einsatz entgegenstehen, stark reduziert ist.

Die Erfindung wird nachfolgend anhand von Zeichnungen näher beschrieben.

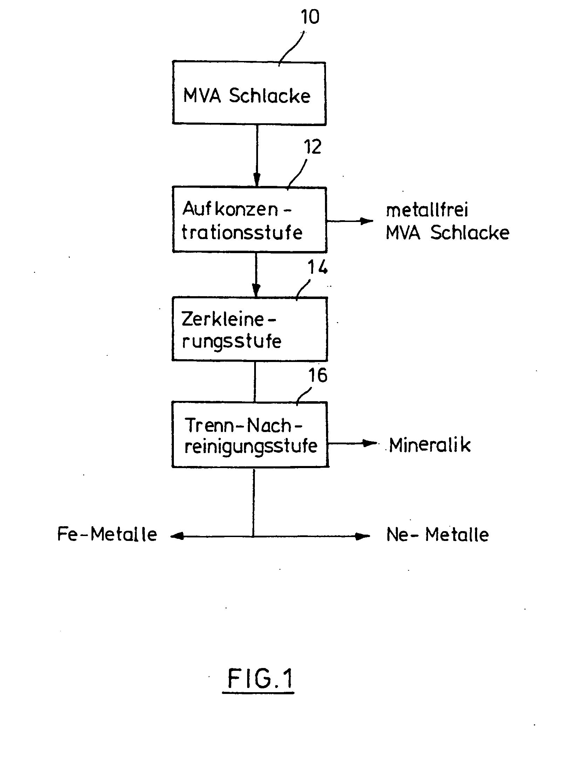

- Fig. 1: zeigt ein Fließschema zum erfindungsgemäßen Verfahren.
- Fig. 2: zeigt eine Zerkleinerungsvorrichtung für die Durchführung des erfindungsgemäßen Verfahrens.

Aus dem Fließschema ist zu erkennen, daß in einer Müllverbrennungseinrichtung als Rückstand gebildete Schlacke 10 einer Aufkonzentrierungsstufe 12 zugeführt wird, zum Beispiel über eine geeignete, nicht gezeigte Fördervorrichtung. In der Aufkonzentrierungsstufe befindet sich eine Detektionsvorrichtung, welche feststellt, in welchen Schlacketeilchen Metall enthalten ist. Die metallfreie Schlacke wird entfernt, und freie Metalle und metallhaltige Schlacke werden einer Zerkleinerungsvorrichtung 14 zugeführt. Es versteht sich, daß zwischen dem Block 10 und der Aufkonzentrationsstufe 12 bereits eine Trennstufe für FE- und NE-Metalle geschaltet sein kann. Eine Trennung von Nichteisen- und Eisenmetallen kann auch bereits vorgenommen werden, bevor die Abfallstoffe in die Müllverbrennungsanlage gelangen. Eine solche Trennung ist jedoch nur bei separat vorliegenden Metallteilen möglich, nicht jedoch bei in der Schlacke eingeschlossenen Metallteilen.

In der Zerkleinerungsstufe 14 erfolgt ein Zerkleinern oder Pulverisieren der Schlacke, insbesondere deren Mineralstoffen und das Trennen dieser Stoffe von eingeschlossenen Metallteilen. Die Metallteile bleiben bei dieser Bearbeitung im Wesentlichen unverformt bzw. unzerkleinert. Der Austrag der Zerkleinerungsstufe 14 wird in eine Trenn- und Nachreinigungsstufe 16 gegeben, in der die zerkleinerten Schlacketeile entfernt werden. Die Metalle können dann anschließend in einer weiteren Stufe in Nichteisen- und Eisenmetalle getrennt werden.

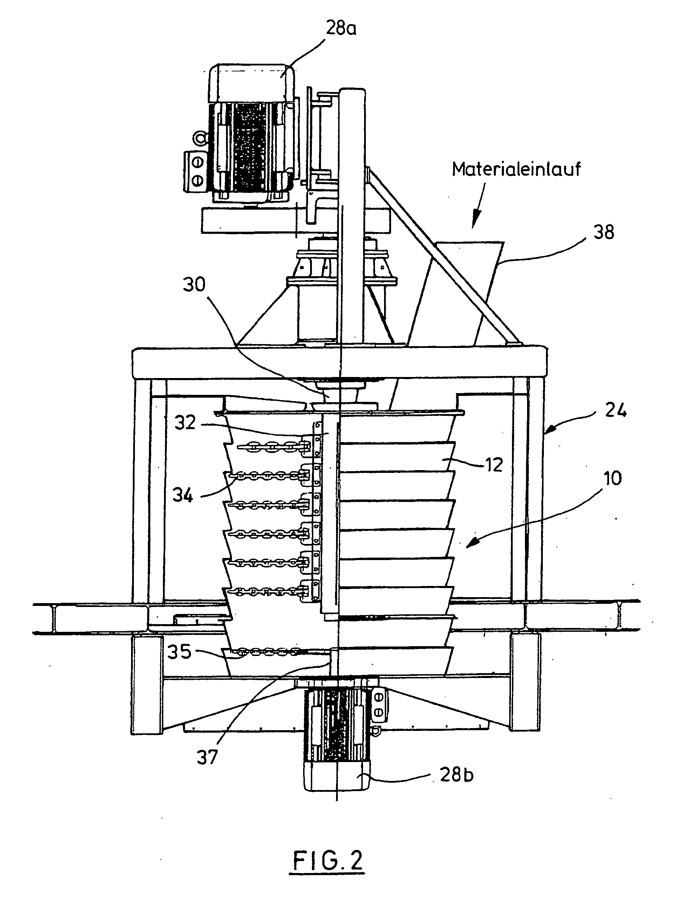

In Figur 2 ist ein Gehäuse 10 zu erkennen, das aus mehreren untereinander angeordneten konischen Gehäuseabschnitten 12 besteht. Die Gehäuseabschnitte 12 sind im Durchmesser von oben gleich.

Das Gehäuse 10 ist in einem Rahmen 24 aufgehängt. Der Rahmen lagert im oberen Bereich eine Welle 30, die von einem Elektroantrieb 28a angetrieben ist. Auf der Welle sitzt eine Hülse 32 drehfest, an der in sechs Ebenen Ketten 34 angelenkt sind. Die Ketten 34 befinden sich an den Übergängen der Gehäuseabschnitte. Die Ketten 34 in den oberen Gehäuseabschnitten 12 werden von der Antriebsvorrichtung 28 angetrieben. Eine Kette 35 im unteren Gehäuseabschnitt 12 wird von dem unteren Antriebsmotor 28b angetrieben, auf dessen Welle eine Hülse 37 drehfest angeordnet ist. Ein oberer Antrieb kann beide Kettengruppen 34, 35 über eine Hohlwelle antreiben. Die Antriebsmotoren 28a, 28b haben entgegengesetzte Drehrichtungen.

Es ist auch denkbar, beide Wellen als Hohlwellenanordnung an der Unterseite des Gehäuses 10 anzuordnen. Schließlich ist auch denkbar, statt zwei Gruppen, drei oder vier Gruppen von Rotorelementen etwa in Form der Ketten vorzusehen, die jeweils untereinander angeordnet sind. Bei vier Gruppen kann eine obere Antriebsvorrichtung über eine Doppelwelle die Rotorelemente der oberen Gruppen antreiben und eine untere Antriebsvorrichtung die beiden unteren Gruppen Rotorelemente über eine Doppelwelle antreiben.

Ein Deckel 36 des Gehäuses 10 weist einen Einfülltrichter 38 für Rückstände der Müllverbrennung auf, die über eine Fördervorrichtung (nicht gezeigt) von oben eingetragen werden.

Wie erkennbar, fällt das Material zumindest auf die rotierenden Ketten 34 (z.B. vier Ketten pro Ebene) und wird schlagend getroffen. Die Enden der Ketten 34, 35 überdecken den Austrittsdurchmesser des jeweils darüber liegenden konischen Abschnitts, sodaß das von dem jeweils einen Gehäuseabschnitt in den nächsten Gehäuseabschnitt fallende Material immer auf Ketten trifft, damit es entsprechend wirksam zerkleinert wird.

Die von oben eingegebene und im Wesentlichen im freien Fall herunterfallende Schlacke wird durch die umlaufenden Ketten 34, 35 zerkleinert und gegen die Gehäusewandung geschleudert und dort mit einer nicht unerheblichen Umfangsgeschwindigkeit bewegt. Dabei bewegt sich die Schlacke zugleich nach unten. Dadurch trifft das an der Gehäusewand des oberen Gehäuseabschnitts 12 bewegte Material auf die Ketten der darunter liegenden Gehäuseabschnitte und wird dort erneut wirksam zerkleinert. Von besonderer Bedeutung ist, daß beim Übergang von den Ketten 34 zu den Ketten 35 des unteren Gehäuseabschnitts eine Drehrichtungsumkehr des nach unten fallenden Materials stattfindet, wodurch die Zerkleinerungswirkung signifikant erhöht wird. Die Schlacke wird zerkleinert und zerbröselt zu einem feinen, körnigen Material, während das freie und das eingeschlossen gewesene Metall im Wesentlichen unzerkleinert bleibt. Dieses Merkmal ist von Bedeutung, insbesondere im Hinblick auf aus Aluminium bestehenden Teilen. Für die Wiederverwertung von Altaluminium ist wichtig, daß die Teile nicht in zu kleiner Form anfallen. Ist dies der Fall, ist eine Wiederverwertung problematisch.

Das freie, aus der Zerkleinerungsvorrichtung 10 austretende Material gelangt auf eine Fördervorrichtung und wird einer in der Figur nicht gezeigten Trennvorrichtung für Metall einerseits und zerkleinerter Schlacke andererseits zugeführt.

Die Metalle bleiben in stückiger Form, mindestens zu 95 %. Die Schwermetallbelastung wird stark reduziert und die Metallrückgewinnung aus den Rückständen gesteigert. Die Schlacke erhält eine gut verwertbare Konsistenz. Deponiekosten werden erhebliche gesenkt. Das Reaktionsverhalten der Schlacke ist deutlich reduziert.

## Patentansprüche

1. Verfahren zur Gewinnung von Metallteilen aus Rückständen von Müllverbrennungsprozessen mit den folgenden Schritten:
• mit Hilfe eines Metall-Detektierverfahrens, insbesondere eines Induktiv-Meßverfahren werden die Rückstände in metallfreie und Metall enthaltende Schlacke sowie freie Metalle getrennt,
• die Metall enthaltenden Schlacken und freie Metalle werden in den oberen Einlauf eines Schachtes einer Zerkleinerungsvorrichtung (14) gegeben, in dem axial beabstandete, vorzugsweise aus Ketten (34, 35) bestehende Rotorelemente, um eine vertikale Achse drehend angetrieben werden, wobei das Material durch den Schacht von oben nach unten durchfällt, wobei
• mineralische Bestandteil der Schlacke zu feinem, körnigem Material zerkleinert und freie Metalie von anhaftender Schlacke befreit werden und die Metallteile im Wesentlichen unzerkleinert bleiben, und
• das frei aus dem Schacht herausfallende und aus einem unteren Auslauf der Zerkleinerungsvorrichtung (14) austretende Material wird anschließend nach Metallteilen und dem übrigen Material sortiert.

2. Verfahren nach Anspruch 1, bei clem das Material von einer oberen Gruppe von Rotorelementen, die in einer ersten Drehrichtung angetrieben sind, bearbeitet und danach von mindestens einer zweiten Gruppe von Rotorelementen bearbeitet wird, die in der entgegengesetzten Drehrichtung angetrieben werden.

3. Verfahren nach Anspruch 1 oder 2, bei dem vor dem Trennen metallhaltiger und metallfreier Schlacke von der Schlacke Unterkorn abgetrennt wird.

4. Verfahren nach Anspruch 3, bei dem die Größe des Unterkorns im Bereich von 0 bis 5 mm liegt.

5. Verfahren nach einem der Ansprüche 1 bis 4, bei dem das Metallgernisch in NE- und FE-Metalle getrennt wird.

6. Verfahren nach einem der Ansprüche 1 bis 5, bei dem die metallhaltige Schlacke von drei oder vier untereinander angeordneten Gruppen von Rotorelementen zerkleinert wird, wobei in benachbaren Gruppen die Rotorelemente gegengesetzten Drehsinn aufweisen.

7. Anlage zur Gewinnung von Metallteilen aus Rückständen von Müllverbrennungsprozessen mit den folgenden Merkmalen:
• Eine Autkonzentrationsstufe (12) durch die Rückstände mit Hilfe einer ersten Fördervorrichtung hindurchgeführt werden und die eine Metalldetektionsvorrichtung und eine Sortiervorrichtung für freie Metalle und metallhaltige Schlacke aufwexst, wobei die Sortiervorrichtung nach Maßgabe der Signale der Detektionsvorrichtung freie Metalle und metallhaltige Schlacke zu einer zweiten Fördervorrichtung bewegt,
• eine Zerkleinerungsvorrichtung (14), nachgeordnet der zweiten Fördervorrichtung mit einem rohrförmigen Schacht, in dessen oberes Ende freie Metalle und metallhaltige Schlacke eingetragen werden und in dem mindestens eine Gruppe von horizontalen, um eine vertikale Achse angetriebenen Rotorelementen, vorzugsweise Ketten, (34, 35) angeordnet ist, und
• eine dem Auslauf der Zerkleinerungsvonichtung (14) nachgeordnete Sortiervorrichtung, in der zerkleinerte Schlacke und im Wesentlichen unzerkleinerte Metallteile getrennt werden.

8. Anlage nach Anspruch 6, bei clem mindestens zwei Gruppen von Rotorelementen untereinander angeordnet sind, wobei die Drehrichtung der Rotorelemente der Gruppen entgegengesetzt ist.

9. Anlage nach Anspruch 7 oder 8, bei dem der Sortiervorrichtung eine weitere Sortierstufe nachgeordnet ist, die FE- und NE-Metalle trennt.

10. Anlage nach Anspruch 7 oder 8, bei dem zwei Gruppen von Rotorelementen von einer oberhalb des Schachtes angeordneten Antriebsvorrichtung über eine koaxiale Welle angetrieben sind.

11. Anlage nach Anspruch 10, bei dem mindestens eine dritte Gruppe von Rotorelementen von einem unterhalb der Rotorelemente der dritten Gruppe angeordneten Antriebsvorrichtung angetrieben ist.

## Claims

1. Method for the recovery of metal parts from residues of waste incineration processes comprising the following steps:
- using a metal detection method, in particular an inductive measurement method, the residues are separated into metal-free and metal-containing slag and free metals,
- the metal-containing slags and free metals are introduced into the upper inlet of a shaft of a comminution device (14), in which shaft rotor elements, which are axially spaced and preferably consist of chains (34, 35), are driven in rotation about a vertical axis, the material falling through the shaft from top to bottom,
- mineral components of the slag being comminuted to form fine, granular material and free metals being released from adherent slag and the metal parts remaining substantially uncomminuted, and
- the material which falls freely from the shaft and comes out of a lower outlet of the comminution device (14) being subsequently sorted into metal parts and the remaining material.

2. Method according to claim 1, wherein the material is processed by an upper group of rotor elements which are driven in a first direction of rotation, and subsequently processed by at least a second group of rotor elements which are driven in the opposite direction of rotation.

3. Method according to either claim 1 or claim 2, wherein undersize particles are separated from the slag before the separation of metal-containing slag and metal-free slag.

4. Method according to claim 3, wherein the size of the undersized particles is in the range of 0 to 5 mm.

5. Method according to any one of claims 1 to 4, wherein the mixture of metals is separated into nonferrous and ferrous metals.

6. Method according to any one of claims 1 to 5, wherein the metat-containing slag is comminuted by three or four groups of rotor elements, which groups are arranged one below the other, the rotor elements in adjacent groups having opposite directions of rotation.

7. System for the recovery of metal parts from residues of waste incineration processes. comprising the following features:
- a concentration stage (12) through which residues are passed using a first conveying device and which comprises a metal detection device and a sorting device for free metals and metal-containing slag, the sorting device moving free metals and metal-containing slag to a second conveying device according to the signals of the detection device,
- a comminution device (14), downstream of the second conveying device, having a tubular shaft, in the top end of which free metals and metal-containing slag are inserted and in which at least one group of horizontal rotor elements, preferably chains (34, 35), which are driven in rotation about a vertical axis is arranged, and
- a sorting device downstream of the outlet of the comminution device (14), in which sorting device comminuted slag and substantially uncomminuted metal parts are separated.

8. System according to claim 6, wherein at least two groups of rotor elements are arranged one below the other, the direction of rotation of the rotor elements of the groups being opposite.

9. System according to either claim 7 or claim 8, wherein the sorting device is downstream of a further sorting stage which separates ferrous and nonferrous metals.

10. System according to either claim 7 or claim 8, wherein two groups of rotor elements of a driving device arranged above the shaft are driven via a coaxial shaft.

11. System according to claim 10, wherein at least a third group of rotor elements is driven by a driving device arranged below the rotor elements of the third group.

## Revendications

1. Procédé de récupération de pièces métalliques dans des résidus de traitement d'incinération d'ordures, le procédé comportant les étapes suivantes :
- à l'aide d'un procédé de détection de métaux, en particulier d'un procédé de mesure par induction, les résidus sont séparés en scories exemptes de métaux, en scories contenant des métaux et en métaux libres,
- les scories contenant des métaux et les métaux libres sont introduits dans l'entrée supérieure du puits d'un dispositif de déchiquetage (14) dans lequel des éléments de rotor situés à intervalles axiaux et de préférence constitués de chaînes (34, 35) sont entraînés en rotation autour d'un axe vertical, le matériau tombant du haut vers le bas dans le puits,
- les composants minéraux des scories sont déchiquetés en matériaux en grains fins, les métaux libres sont débarrassés des scories qui y adhèrent et les parties métalliques restent essentiellement non déchiquetées,
- le matériau tombant librement hors du puits et sortant par une sortie inférieure du dispositif de déchiquetage (14) est ensuite trié en pièces métalliques et en autres matériaux.

2. Procédé selon la revendication 1, dans lequel le matériau est traité par un groupe supérieur d'éléments de rotor entraînés dans un premier sens de rotation et ensuite est traité par au moins un deuxième ensemble d'éléments de rotor entraînés dans le sens de rotation opposé.

3. Procédé selon les revendications 1 ou 2, dans lequel la fraction fine des scories est séparée avant la séparation en scories contenant des métaux et scories exemptes de métaux.

4. Procédé selon la revendication 3, dans lequel la taille des grains de la fraction fine est de l'ordre de 0 à 5 mm.

5. Procédé selon l'une des revendications 1 à 4, dans lequel le mélange de métaux est séparé en métaux non ferreux et en métaux ferreux.

6. Procédé selon l'une des revendications 1 à 5, dans lequel les scories contenant des métaux sont déchiquetées par trois ou quatre ensembles d'éléments de rotor disposés les uns en dessous des autres, les éléments de rotor d'ensembles voisins présentant des sens de rotation opposés.

7. Installation de récupération de pièces métalliques dans des résidus de traitement d'incinération d'ordures, l'installation présentant les caractéristiques suivantes :
- un étage de concentration (12) dans lequel on fait passer les résidus à l'aide d'un premier dispositif de transport et qui présente un dispositif de détection de métaux et un dispositif de tri des métaux libres et des scories contenant des métaux, le dispositif de tri déplaçant vers un deuxième dispositif de transport les métaux libres et les scories contenant des métaux en fonction des signaux du dispositif de détection,
- un dispositif de déchiquetage (14) prévu en aval du deuxième dispositif de transport et présentant un puits tubulaire à l'extrémité supérieure duquel les métaux libres et les scories contenant des métaux sont introduits et dans lequel est disposé au moins un ensemble d'éléments de rotor horizontaux entraînés autour d'un axe vertical, de préférence des chaînes (34, 35) et
- un dispositif de tri disposé en aval de la sortie du dispositif de déchiquetage (14) et dans lequel les scories déchiquetées et les pièces métalliques essentiellement non déchiquetées sont séparées.

8. Installation selon la revendication 6, dans laquelle au moins deux ensembles d'éléments de rotor sont disposés l'un en dessous de l'autre, les éléments de rotor ayant des sens de rotation opposés dans chacun des groupes.

9. Installation selon les revendications 7 ou 8, dans laquelle un autre étage de tri est prévu en aval du dispositif de tri et sépare les métaux ferreux des métaux non ferreux.

10. Installation selon les revendications 7 ou 8, dans laquelle deux groupes d'éléments de rotor sont entraînés par l'intermédiaire d'un arbre coaxial par un dispositif d'entraînement disposé à l'extérieur du puits.

11. Installation selon la revendication 10, dans laquelle au moins un troisième groupe d'éléments de rotor est entraîné par un dispositif d'entraînement disposé en dessous des éléments de rotor du troisième groupe.
